(19)

Europäisches
Patentamt
European
Patent Office
Office européen
des brevets

(11)  **EP 2 099 152 A2**

(12)  **EUROPEAN PATENT APPLICATION**

(43) Date of publication:
    **09.09.2009 Bulletin 2009/37**

(51) Int Cl.:
    **H04L 1/18** (2006.01)

(21) Application number: **08165044.2**

(22) Date of filing: **24.09.2008**

| | |
|---|---|
| (84) Designated Contracting States:<br>**AT BE BG CH CY CZ DE DK EE ES FI FR GB GR<br>HR HU IE IS IT LI LT LU LV MC MT NL NO PL PT<br>RO SE SI SK TR**<br>Designated Extension States:<br>**AL BA MK RS** | (72) Inventors:<br>• **Zhou, Hua**<br>  **100025, Beijing (CN)**<br>• **Hayashi, Hiroyuki**<br>  **100025, Beijing (CN)** |
| (30) Priority: **07.03.2008  CN 200810082923** | (74) Representative: **Wilding, Frances Ward et al<br>Haseltine Lake LLP<br>Lincoln House, 5th Floor<br>300 High Holborn<br>London WC1V 7JH (GB)** |
| (71) Applicant: **Fujitsu Limited<br>Kawasaki-shi, Kanagawa 211-8588 (JP)** | |

(54)  **MIMO-HARQ communication system and communication method**

(57)  The invention relates to a MIMO-HARQ communication system and communication method. When a receiver carries out a CRC for received data streams and detects an error in a data stream, it feeds back to a transmitter and requests a retransmission of the data stream. The transmitter determines the correspondence between the data streams to be transmitted and a plurality of transmitting antennas in a method for retransmitting the error data stream with a transmitting antenna other than the one having transmitted the error data stream. Transmission and retransmission of a same data stream experience different spatial fading channels, so that an additional spatial diversity gain is obtained by exchanging the transmission sequences, in addition to a time diversity gain obtained by retransmission, and hence the probability of successful transmission is improved.

Fig. 4

**EP 2 099 152 A2**

**Description**

Field of the Invention

The present invention relates to Hybrid Automatic Repeat Request (HARQ) in a Multiple-Input Multipte-Output (MIMO) communication system, and more particularly, to HARQ used for a MIMO communication system (including single-user MIMO, i.e., data transmitted to a plurality of antennas comes from a same user, and multi-user MIMO, i.e., data transmitted to a plurality of antennas comes from different users).

Background of the Art

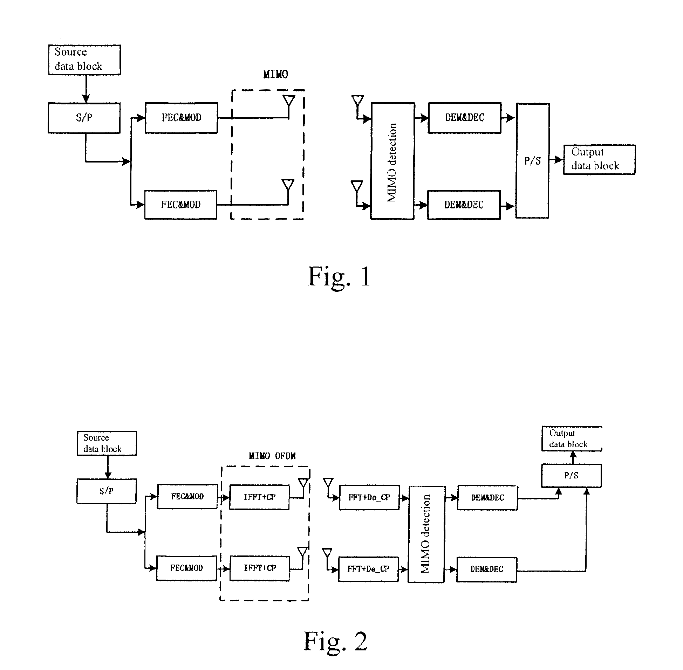

MIMO communication scheme has been accepted as a part of many industrial standards, such as 3GPP LTE, IEEE 802.16E [1], which can significantly improve spectrum efficiency, through spatial multiplexing multiple data streams at the transmitter, and demultiplexing these streams at the receiver aiming to increase the data rate without more frequency and time resources being occupied. Generally, forward error correction (FEC) can be combined with MIMO to improve the transmission quality under a poor wireless environment. Among those schemes combining FEC and MIMO, there are two combining methods, one is vertical coding MIMO, i.e., carrying out PEC and modulation of the data streams firstly, and then carrying out serial / parallel (S/P) transformation to divide the streams into a plurality of substreams which are transmitted to a plurality of antennas; the other is horizontal coding MIMO, i.e., carrying out S/P transformation of the data streams firstly, and then carrying out FEC and modulation of each of the substreams which are transmitted to the respective antennas. When HARQ is combined, a cyclic redundant check (CRC) is carried out for the vertical coding MIMO before FEC, while CRC is carried out for the horizontal coding MIMO after S/P transformation. As shown in Fig. 1, the horizontal coding scheme is more attractive than the vertical one, because in the horizontal coding scherne, each data stream has its independent FEC & MOD module, in which case, the data rate for each data stream can be adapted with its corresponding channel status; besides, each data stream can be set with an individual CRC, and when the receiving end detects certain CRC error, only the corresponding data stream is requested to be retransmitted, instead of other data streams.
Fig. 1 shows the 2 Tx horizontal coding MIMO communication system with two antennas, and the details are as follows.
In the single-user MIMO system, a source data block inputted by a source data block input section is demultiplexed into two data streams by an S/P transformation section at a transmitter. In the multi-user MIMO system, data streams coming from two users enter the next module directly, then FEC and modulation of the data streams are carried out by two FEC & MOD modules respectively, and finally the coded and modulated data streams are transmitted by two transmitting antennas, respectively.
In the single-user MIMO system, it is assumed that the receiver has at least two receiving antennas, which means that the two data streams transmitted by the transmitter can be detected at the receiver through linear detection methods such as minimum mean square error (MMSE) and zero forcing (ZF), or non-linear detection methods such as maximum likelyhood detection (MLD). In details, a MIMO detection section in the receiver detects data streams received by the receiving antennas; after that, DEM & DEC section in each branch demodulates and decodes the detected data streams, and the demodulated and decoded data streams are fed to the P/S transformation section, in which it is determined whether the decoded outputs (CRC is adopted in many systems, such as 3GPP LTE, IEEE 802.16E) of the two data streams are correct; if the decoded outputs (e.g., CRC) are correct, the two decoded data streams are multiplexed to restore an original source data block. Similarly, in the multi-user MIMO system, each of the user-side receivers detects the data stream belonging to the respective user by means of various MIMO detection algorithms. The technology of orthogonal frequency division multiplexing (OFDM) is adopted for the convenience of transmission in the wireless multi-path channel. In this condition, the MIMO technology is still applicable, and Fig. 2 shows a horizontal coding 2 Tx MIMO communication system having an OFDM structure.
As compared with Fig. 1, Fig. 2 is provided with an IFFT & CP addition section at the transmitter to carry out a quick inverse FOURIER transformation for the data streams processed by the FEC & MOD section, and to add cyclic prefixes (CPs), so as to eliminate the multi-path fading effect; and then, the data streams after the quick inverse FOURIER transformation and being added with the CPs are transmitted through corresponding transmitting antennas. Furthermore, as compared with Fig. 1, Fig. 2 is provided with a FFT & CP elimination section at the receiver to carry out a FOURIER transformation for signals received by each of the receive antennas, and to eliminate the CPs. Other components and corresponding processing are the same as those under the condition of single carrier wave as shown in Fig.1, and herein are not described in detail.
A packet transmission system waits for the receiving end to notify whether the reception is correct after the data streams are transmitted by the transmitting end; if the reception by the receiving end is correct, ACK (acknowledgement) or nothing is transmitted, and the transmitting end transmits a next data packet after receiving ACK or nothing;

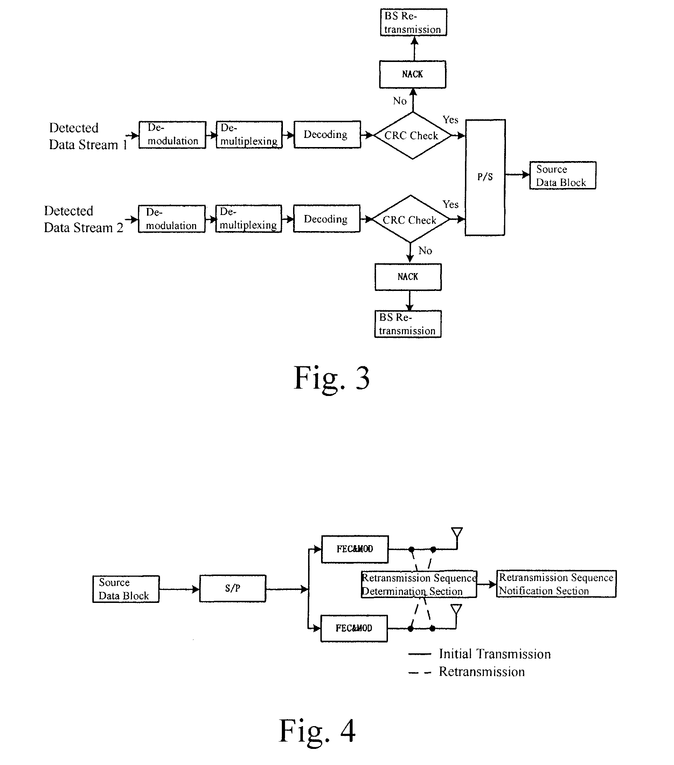

if the reception by the receiving end is incorrect, NACK (non-acknowledgement) is transmitted, and the transmitting end retransmits the data packet after receiving NACK. Whether the reception is correct is determined by the receiving end based on a CRC at the tail of the data packet. The application of this retransmission request mechanism in the MIMO system is shown in Fig. 3. In consideration that the horizontal coding MIMO is better than the vertical coding MIMO, only the receiving processing for the conventional HARQ mechanism for the horizontal coding 2 Tx MIMO communication system is given herein.

If a data block transmitted through a transmitting antenna is detected as correct by a CRC at the receiver, then it can be buffered to wait for other data blocks; and if an error is detected in a data block, the data block is requested to be retransmitted on the same transmitting antenna through an ACK feedback. In this condition, the first transmission and the subsequent retransmission might experience the same spatial fading channel, and the error rate of retransmission is still possibly high, especially in a slow changing fading environment. Therefore, a new retransmission scheme is required to decrease the number of retransmissions as much as possible.

References [2~5] have considered other schemes to improve the retransmission quality, some of which design an orthogonal space time coding scheme or other space time coding schemes for two retransmitted data streams. But all of these schemes are only suitable for the vertical coding MIMO communication system, wherein if an error is detected in the CRC, both data streams shall be retransmitted, no matter whether only one block is wrong. For the horizontal coding MIMO communication system, there is no existing method to optimize the retransmission quality.

[References]

[1] Part 16: Air Interface for Fixed Broadband Wireless Access Systems, IEEE P802.16 (Draft March 2007), Revision of IEEE Std 802.16-2004, as amended by IEEE Std 802.16f-2005 and IEEE 802.16e-2005

[2] Gao Yang, Guangjie Li, Kuilin Chen, "A Novel HARQ scheme utilizing the iterative soft-information feedback in MIMO system", VTC 2007-spring, April, 2007, P: 423-424

[3] Gao Yang, Guangjie Li, Kuilin Chen, "Novel MIMO HARQ schemes Jointly utilizing chase combining", ICCT 2006, Nov. 2006, P: 1-5

[4] Mi-kyung Oh, Young-Hyeon Kwon, "Efficient hybrid ARQ with space-time coding and low-complexity decoding", ICASSP' 04, May 2004, P: 589-592

[5] Onggosanusi E.N, Dabak A.G, Yan Hui, "Hybrid ARQ transmission and combining for MIMO systems", ICC 2003, May 2003, P: 3205-3209

Summary of the Invention

The present invention is provided in view of the above problems in the prior art. It is desirable to provide an improved HARQ method used for horizontal coding MIMO communication system, and a MIMO communication system using the same, wherein the correspondence between data streams to be transmitted and a plurality of transmitting antennas is determined at the transmitter, in a method for retransmitting the data stream through a transmitting antenna other than the one having transmitted the error data stream detected at the receiver.

According to an embodiment of the first aspect of the invention, a MIMO-HARQ communication system is provided, comprising a transmitter and a receiver, and the transmitter having a plurality of transmitting antennas; after coding and modulating a plurality of data streams obtained by demultiplexing source data blocks with respect to the user via S/P transformation in case of single-user MIMO, or after directly coding and modulating data streams with respect to each user in case of multi-user MIMO, the plurality of coded and modulated data streams are transmitted via the transmitting antennas in parallel; after receiving, demodulating and decoding the data streams, the receiver performing a CRC check to the data streams, respectively, and, when an error data stream is detected, feeding back to the transmitter to request a retransmission of the error data stream, wherein the transmitter comprises a retransmission sequence determination section that determines the correspondence between the data streams to be transmitted and the plurality of transmitting antennas, so that the error data stream is retransmitted with a transmitting antenna other than the one having transmitted the error data stream. Preferably, in the above MIMO-HARQ communication system, the transmitter further comprises a retransmission sequence notification section that notifies the receiver of a retransmission sequence determined by the retransmission sequence determining section, so that the receiver can restore data in a correct sequence.

Preferably, in the above MIMO-HARQ communication system, the retransmission sequence determination section determines a new transmission sequence in a method commonly known to the transmitter and the receiver, and when a transmission sequence is changed, the retransmission sequence determination section transmits a symbol to the receiver to notify that the transmission sequence is changed.

Preferably, in the above MIMO-HARQ communication system, the transmitter applies different coding and modulating schemes to the plurality of data streams, respectively.

Preferably, in the above MIMO-HARQ communication system, the retransmission sequence determination section determines the correspondence between the data streams to be transmitted and the plurality of transmitting antennas in a circular method.

Preferably, the above MIMO-HARQ communication system is combined with an OFDM transmitting mode or a single carrier wave transmitting mode.

Preferably, in the above MIMO-HARQ communication system, the receiver further feeds back pre-coding vectors, matrix indexes, or quantized channel information to the receiver, so as to instruct pre-coding of each data stream.

According to an embodiment of the second aspect of the invention, a method for determining a retransmission sequence in a MIMO-HARQ communication system is provided, the MIMO-HARQ communication system comprising a transmitter and a receiver, and the transmitter having a plurality of transmitting antennas; after coding and modulating a plurality of data streams obtained by demultiplexing source data blocks with respect to the user via S/P transformation in case of single-user MIMO, or after directly coding and modulating data streams with respect to each user in case of multi-user MIMO, the plurality of coded and modulated data streams are transmitted via the transmitting antennas in parallel; after receiving, demodulating and decoding the data streams, the receiver performing a CRC check to the data streams, respectively, and, when an error data stream is detected, feeding back to the transmitter to request a retransmission of the error data stream, characterized in comprising the step of: determining the correspondence between the data streams to be transmitted and the plurality of transmitting antennas in a method of retransmitting the error data stream with a transmitting antenna other than the one having transmitted the error data stream.

According to the above technical solutions of embodiments of the present invention, the data stream is retransmitted with a transmitting antenna other than the one having transmitted the error data stream detected at the receiver, thus transmission and retransmission of the same data stream concern different spatial fading channels. As a result, a time diversity gain is obtained by retransmission, and an additional spatial diversity gain is also obtained by exchanging the transmission sequences, so that the probability of transmission success can be increased.

Brief Description of the Drawings

Preferred features of the present invention will now be described, purely by way of example, reference to the accompanying drawings, in which:

Fig. 1 schematically shows one 2 Tx horizontal coding MIMO communication system having two transmitting antennas.

Fig. 2 schematically shows one 2 Tx horizontal coding MIMO communication system having an OFDM structure.

Fig. 3 shows receiving processing with respect to conventional HARQ mechanism for 2 Tx horizontal decoding MIMO communication system.

Fig. 4 schematically shows the structure diagram of a transmitter in the MIMO-HARQ communication system of the present invention.

Detailed Description of the Preferred Embodiments

The MIMO-HARQ communication system of embodiments of the present invention is described as follows in reference to Fig. 4.

Like the description of the prior art, the horizontal coding MIMO communication system is described by taking an example of two transmitting antennas and two layers of data streams. However, the present invention is not limited to this condition, and more than two transmitting antennas, more than two layers of data streams, or the vertical coding MIMO communication system can also be adopted.

$Block_{1,0}$ and $Block_{2,0}$ are respectively transmitted at transmitting antenna 1 and transmitting antenna 2 at initial transmission. During a CRC, if an error is detected in received data stream 1 at the receiver (we can also suppose that received data stream 2 has an error, and the processing is similar to the follows), then $Block_{1,0}$ is retransmitted at transmitting antenna 2 at a next transmission slot, and new generated $Block_{2,1}$ is transmitted at transmitting antenna 1.

If $Block_{1,0}$ still has an error, then at the second retransmission slot, $Blocs_{1,0}$ is retransmitted at transmitting antenna 1. Similarly, if data stream 2 has an error, it is retransmitted at the transmitting antenna 1.

In summary, if an error is detected in a received data block at the receiver, the transmission sequences are exchanged on the two transmitting antennas of the transmitter, so as to retransmit the error data block. Accordingly, at the receiver, the received data streams are combined in a sequence same as the transmission sequence at the transmitter.

In details, different from the horizontal coding MIMO communication system of the prior art, as shown in Fig. 4, the transmitter in the MIMO communication system of the present invention further comprises a retransmission sequence determination section and a retransmission sequence notification section; the retransmission sequence determination section is used to perform the above processing of exchanging the retransmission sequences, and the retransmission sequence notification section notifies the receiver of a retransmission sequence determined by the retransmission sequence determining section, so that the receiver can restore data in a correct sequence.

The following table compares the retransmission schemes for the conventional HARQ and the HARQ of the present invention, in the horizontal coding MIMO communication system, wherein Tx1 and Tx2 represent different transmitting antennas, respectively.

| Data stream 1 is wrong after the first transmission | Initial transmission | 1st transmission | 2nd transmission |
|---|---|---|---|
| Conventional retransmission scheme | $\begin{bmatrix} Tx_1 \\ Tx_2 \end{bmatrix} = \begin{bmatrix} Block_{1,0} \\ Block_{2,0} \end{bmatrix}$ | $\begin{bmatrix} Tx_1 \\ Tx_2 \end{bmatrix} = \begin{bmatrix} Block_{1,0} \\ Block_{2,1} \end{bmatrix}$ | $\begin{bmatrix} Tx_1 \\ Tx_2 \end{bmatrix} = \begin{bmatrix} Block_{1,0} \\ Block_{2,2} \end{bmatrix}$ |
| Retransmission scheme of the present invention | $\begin{bmatrix} Tx_1 \\ Tx_2 \end{bmatrix} = \begin{bmatrix} Block_{1,0} \\ Block_{2,0} \end{bmatrix}$ | $\begin{bmatrix} Tx_1 \\ Tx_2 \end{bmatrix} = \begin{bmatrix} Block_{2,1} \\ Block_{1,0} \end{bmatrix}$ | $\begin{bmatrix} Tx_1 \\ Tx_2 \end{bmatrix} = \begin{bmatrix} Block_{1,0} \\ Block_{2,2} \end{bmatrix}$ |

According to the retransmission scheme for the HARQ of the present invention, transmission and retransmission of the same data block experience different spatial fading channels, so that an additional spatial diversity gain is obtained by exchanging the transmission sequences, in addition to a time diversity gain obtained by retransmission, and hence the probability of successful transmission can be improved. While the conventional scheme retransmits the same block at the same antenna, and cannot get a spatial diversity gain over the retransmission, thus the probability of successful transmission is limited.

In addition, in the above MIMO communication system of embodiments of the present invention, the retransmission sequence determining section can exchange retransmission sequences in a predetermined method commonly known to the transmitter and the receiver. Under this condition, when the transmission sequence is changed, the transmitter only needs to transmit a symbol to the receiver via the retransmission sequence notification section to notify that the transmission sequence is changed.

In addition, in the above MIMO communication system of embodiments of the present invention, coding and modulating schemes for respective FEC & MOD sections of the data streams can be the same, or different from each other. Preferably, different coding and modulating schemes are applied to the FEC & MOD sections to further improve the quality of retransmission. In case that different coding and modulating schemes are applied to different data streams, when transmitting antenna for certain data stream is changed, the coding and modulating scheme and the size of the data block shall be changed adaptively, so as to be adapted to the channel quality of the current transmitting antenna. Furthermore, when a closed-loop MIMO system is adopted, MIMO pre-coding vectors (matrixes) can be adjusted to fit the status of the current channel.

In addition, the above MIMO-HARQ communication system of embodiments of the present invention can be combined with the OFDM transmitting mode or single carrier wave transmitting mode, so as to be applied to different communication environments.

In addition, the above MIMO-HARQ communication system of embodiments of the present invention can feedback pre-coding vector (matrix) indexes or quantized channel information to instruct pre-coding of each data stream, as well as feedback whether the received data block has an error with ACK or NACK. Accordingly, pre-coding weight is available to each transmitting antenna.

In addition, in the above MIMO-HARQ communication system of embodiments of the present invention, the mapping relations between the data streams and the transmitting antennas can be determined based on the transmitting requirement.

In addition, in the above MIMO-HARQ communication system of embodiments of the present invention, there may be more than two transmitting antennas at the receiver, and correspondingly, there may be more than two data streams. When an error is detected in a received data block at the receiver, the retransmission sequence determination section cyclically exchanges the transmission sequences at the transmitting antenna. E.g., if NACK is fed back after data block 1 transmitted at transmitting antenna 1 being detected by the receiver, data block 1 is retransmitted at transmitting antenna 2; if NACK is also fed back after data block 2 transmitted at transmitting antenna 2 being detected by the receiver, data block 2 is retransmitted at transmitting antenna 3, or if ACK is fed back, new data block 2 is generated and transmitted at transmitting antenna 3; by analogy, when an error is detected in the last data block N, it is retransmitted at transmitting antenna 1, and when it is received correctly, new data block N is transmitted at transmitting antenna 1. However, the present invention is not limited to the above exchanging transmitting mode, and the mapping relation between the data block retransmitted / generated and the transmitting antenna can be arranged by retransmitting the error data block detected in the reception at an antenna other than the original transmitting antenna.

To be noted, the present invention may also be adapted to computer program for carrying out the above HARQ method and computer readable record medium having the computer program thereon. The computer readable record medium may include computer readable floppy disk, hard disk, semiconductor memory, CD-ROM, DVD, Magnetic Optical (MO) and other mediums.

Although the present invention is only illustrated with the preferred embodiments, persons skilled in the art can easily make various changes and modifications based on the disclosure without going beyond the scope of the invention defined by the claims. The description of the above embodiments is just exemplary, and does not intend to limit the invention defined by the claims and the equivalents.

**Claims**

1. A MIMO-HARQ communication system that comprises a transmitter having a plurality of transmitting antennas and a receiver, after coding and modulating a plurality of data streams obtained by demultiplexing source data blocks from a same data source through serial / parallel transformation, respectively, or after coding and modulating a plurality of data streams from different data sources, respectively, the transmitter transmitting the plurality of coded and modulated data streams through the plurality of transmitting antennas in parallel; after receiving, demodulating and decoding the data streams, the receiver performing a CRC check to the data streams, respectively, and, when an error data stream is detected, feeding back to the transmitter to request a retransmission of the error data stream, **characterized in that,**
the transmitter comprises a retransmission sequence determination section that determines the correspondence between the data streams to be transmitted and the plurality of transmitting antennas so as to retransmit the error data stream with a transmitting antenna other than the one having transmitted the error data stream.

2. The MIMO-HARQ communication system according to claim 1, **characterized in that,** the transmitter further comprises a retransmission sequence notification section that notifies the receiver of a retransmission sequence determined by the retransmission sequence determining section, so that the receiver can restore data in a correct sequence.

3. The MIMO-HARQ communication system according to claim 1 or 2, **characterized in that**, the retransmission sequence determination section determines a new transmission sequence in a method commonly known to the transmitter and the receiver, and when a transmission sequence is changed, the retransmission sequence determination section transmits a symbol to the receiver to notify that the transmission sequence is changed.

4. The MIMO-HARQ communication system according to any of the preceding claims, **characterized in that,** the transmitter applies different coding and modulating schemes to the plurality of data streams, respectively.

5. The MIMO-HARQ communication system according to claim 4, **characterized in that,** when the correspondence between the data streams and the transmitting antennas is changed, the coding and modulating schemes, sizes of the data blocks, and pre-coding vectors or matrixes of the data streams are changed so as to correspond to the current transmitting antenna of each data stream, respectively.

6. The MIMO-HARQ communication system according to any of the preceding claims, **characterized in that,** the retransmission sequence determination section determines the correspondence between the data streams to be transmitted and the plurality of transmitting antennas in a circular method.

7. The MIMO-HARQ communication system according to any of the preceding claims, **characterized in that,** the MIMO-HARQ communication system is combined with an OFDM transmitting mode or a single carrier wave transmitting mode.

8. The MIMO-HARQ communication system according to any of the preceding claims, **characterized in that**, the receiver further feeds back pre-coding vectors, matrix indexes, or quantized channel information to the receiver, so as to instruct precoding of each data stream.

9. A method for determining a retransmission sequence in a MIMO-HARQ communication system that comprises a transmitter having a plurality of transmitting antennas and a receiver; after coding and modulating a plurality of data streams obtained by demultiplexing source data blocks from a same data source through serial/parallel transformation, respectively, or coding and modulating a plurality of data streams from different data sources, respectively, the transmitter transmitting the plurality of coded and modulated data streams through the plurality of transmitting antennas in parallel; after receiving, demodulating and decoding the data streams, the receiver performing a CRC check to the data streams respectively, and, when an error data stream is detected, feeding back to the transmitter to request a retransmission of the error data stream,
**characterized in** comprising the step of:
determining the correspondence between the data streams to be transmitted and the plurality of transmitting antennas in a method of retransmitting the error data stream with a transmitting antenna other than the one having transmitted the error data stream.

10. The method according to claim 9, **characterized in** further comprising the step of: notifying the receiver of the determined retransmission sequence, so that the receiver can restore data in a correct sequence.

11. The method according to claim 9 or 10, **characterized in that**, a new transmission sequence is determined in a method commonly known to the transmitter and the receiver, and when a transmission sequence is changed, a symbol is transmitted to the receiver to notify that the transmission sequence is changed.

12. The method according to any of the preceding method claims, **characterized in that,** different coding and modulating schemes are applied to the plurality of data streams, respectively in the transmitter.

13. The method according to claim 12, **characterized in that,** when the correspondence between the data streams and the transmitting antennas is changed, the coding and modulating schemes, sizes of the data blocks, and pre-coding vectors or matrixes of the data streams are changed so as to correspond to the current transmitting antenna of each data stream, respectively.

14. The method according to any of the preceding claims, **characterized in that**, the correspondence between the data streams to be transmitted and the plurality of transmitting antennas is determined in a circular method.

Fig. 1

Fig. 2

BS Re-transmission

NACK

No

Detected Data Stream 1 → De-modulation → De-multiplexing → Decoding → CRC Check — Yes

P/S → Source Data Block

Detected Data Stream 2 → De-modulation → De-multiplexing → Decoding → CRC Check — Yes

No

NACK

BS Re-transmission

Fig. 3

Source Data Block → S/P → FEC&MOD

Retransmission Sequence Determination Section

Retransmission Sequence Notification Section

FEC&MOD

—— Initial Transmission
— — Retransmission

Fig. 4

## REFERENCES CITED IN THE DESCRIPTION

**Non-patent literature cited in the description**

- **Gao Yang ; Guangjie Li ; Kuilin Chen.** A Novel HARQ scheme utilizing the iterative soft-information feedback in MIMO system. spring, April 2007, 423-424
- **Gao Yang ; Guangjie Li ; Kuilin Chen.** Novel MIMO HARQ schemes Jointly utilizing chase combining. *ICT 2006,* November 2006, 1-5

- **Mi-kyung Oh ; Young-Hyeon Kwon.** Efficient hybrid ARQ with space-time coding and low-complexity decoding. *ICASSP,* 04 May 2004, 589-592
- **Onggosanusi E.N ; Dabak A.G ; Yan Hui.** Hybrid ARQ transmission and combining for MIMO systems. *ICC,* May 2003, 3205-3209